# EUROPEAN PATENT SPECIFICATION

(11) **EP 0 431 529 B1**
(45) Date of publication and mention of the grant of the patent: **20.03.1996**
(21) Application number: 90123120.9
(22) Date of filing: 03.12.1990
(51) Int. Cl.: G03B 17/30

(54) **A self-advancing film cassette**
Selbstvorrückende Kassette
Cassette à auto-avancement

(30) Priority: 06.12.1989 JP 317166/89; 13.12.1989 JP 323478/89; 04.06.1990 JP 146022/90
(43) Date of publication of application: 12.06.1991
(73) Proprietor: FUJI PHOTO FILM CO., LTD., Kanagawa (JP)
(72) Inventor: Mizuno, Kazunori, c/o Fuji Photo Film Co., Ltd., Minami Ashigara-shi, Kanagawa-ken (JP)
(74) Representative: Grünecker, Kinkeldey, Stockmair & Schwanhäusser Anwaltssozietät

(56) References cited:
- DE-C- 1 002 196
- GB-A- 1 286 512
- US-A- 4 832 275
- US-A- 4 860 037
- US-A- 4 875 638
- US-A- 4 903 053
- US-A- 4 955 555

## Description

The present invention relates to a self-advancing film cassette of the type as described in the preamble of claim 1.

A self-advancing film cassette of this type is described in US-A-4 875 638. The cassette shell of the known film cassette includes a flat film support member located proximate the outlet slit for the film to leave the cassette shell. The film support member includes an exposure-completed indicator which is visible through a window in the shell. The indicator is normally covered by the film. The trailing end of the film has a cut-out which enables the film to fall away from the film support member so that the indicator is now visible through the window.

GB-A-1 286 512 describes a roll film cartridge comprising a storage portion for storing a film, a take-up portion for taking up the film and a connecting portion arranged between the storage portion and the take-up portion. A frame-counting disk having a scale mark thereon, is rotatably mounted on the back wall of the connecting portion. A window is provided through which the numbers of the scale are visible from the outside. A spring rod having two arms is secured to the back wall of the cartridge for advancing the disk. One of the arms projects into perforations of the film for transferring the movement of the film to the other arm and to the disk.

Some photographic cameras for use with a 135 film cassette loaded therein rewind the photographic film after all exposures until the film leader of the film is completely drawn back in a cassette shell of the film cassette. As to an ordinary film cassette to be used in such cameras, it can be judged whether the film is used or unused according to whether the film leader is protruded from the cassette shell or not. The other cameras rewind the film in the cassette shell with the film leader still protruded from the film cassette, which construction serves to make the film cassette efficient in the process of development. A film cassette to be used in such cameras has a problem in that the film cassette cannot be visually judged to be used or unused since the film leader is also protruded from the film cassette after it is used.

Film cassettes for simplifying the operation of loading the camera therewith have been proposed as disclosed in US-A-4,832,275, 4,834,306 and 4,846,418. Such film cassettes have a film leader which is contained in a cassette shell even in an unused state, and is to be advanced to the outside of the cassette shell by rotating a spool in the cassette shell through a mechanism incorporated in a camera. When the film is rewound into the cassette shell till the film leader is drawn back in the cassette shell, the film cassette cannot be judged to be exposed or unexposed. Improved film cassettes are proposed as disclosed in US-A-4,682,870 and JP-A-58-121027, according to which a portion of a cassette shell is mechanically deformed by a mechanism in a camera when the film cassette is loaded in the camera. The film cassette can visually be judged to be used or unused in accordance with whether or not the film cassette is mechanically deformed.

Film cassettes with photographic film contained therein for preventing its reuse are disclosed in JP-A-57-6576 and US-A-4,860,037. The film is provided with a magnetic recording layer for recording thereon data as to a used or unused state, a number of exposed frames and the like when loaded in a camera. The reuse of the film can be prevented by reading the data recorded in the magnetic recording layer when loaded again. Accordingly, the reuse of the exposed film can be prevented even when the film cassette with this film is inadvertently loaded again.

However in the film cassette disclosed in US-A-4,682,870 or JP-A-58-121027 having a portion to be deformed when loaded in a film supply chamber in a camera or upon closing a door of the film supply chamber, the film cassette will have deformity indicating a used state even after unloading it without any exposure. Such an unloaded film cassette has a fear of being regarded as used though unused. There is also a problem in that a film cassette unloaded from a camera with unexposed frames left in the film during its use cannot be subjected to exposure on the unexposed frames even when loaded again. Mechanical deformation of a portion of a film cassette requires addition of a mechanism to the camera. However, such a mechanism will actually be too complicated to embody easily, because it would be constructed in consideration of compatibility with an ordinary film cassette without a portion to be mechanically deformed. Although the unexposed frames can be exposed in a film cassette disclosed in JP-A-57-6576 and US-A-4,860,037 as the film cassette having been unloaded is loaded, a problem is raised in that no visual judgement as to a used or unused state can be made from the magnetic recording layer. Thus there is a fear of advancing and reusing the film when the film cassette is reloaded in a camera lacking a mechanism for reading the recorded data.

Therefore it is an object of the present invention to provide a self-advance film cassette for preventing a user from reusing the exposed film when loaded in a photographic camera.

It is another object of the present invention to provide a self-advance film cassette having a visible indication of the exposed or unexposed state without need of an extra mechanism in the photographic camera for switching the indication.

In order to achieve the above and other objects and advantages of this invention, a self-advancing film cassette according to claim 1 comprises: an indicator window formed on a surface of the cassette shell for indicating therein a degree of using the film; an indicator member movable into the indicator window; and means for changing indication shown by the indicator member in accordance with rotation of the spool.

In a preferred embodiment of the present invention, a self-advancing film cassette comprises a data recording portion provided on the film or on the cassette shell for storing data as to the number of exposed frames in the film to be read by a data reading device incorporated in a camera.

For use with a self-advancing film cassette, a photographic camera comprises a device for reading data as to a degree of using the film from data storing means provided in the film cassette for storing the data.

According to the present invention, the degree of using the film can be indicated at the end of film initial advance preliminary to exposure upon rotating the spool so as to make an indication more suitable than a conventional indication at the time of loading the film cassette in the film supply chamber. Such a film cassette can also be loaded and used in all types of camera since the film cassette requires no extra mechanism for switching the indication in the camera.

The above objects and advantages of the present invention will become more apparent from the following detailed description when read in connection with the accompanying drawings, in which:
Fig. 1 is a perspective view illustrating a film cassette according to a first embodiment of the present invention;
Fig. 2 is a section view illustrating the film cassette illustrated in Fig. 1;
Fig. 3 is a perspective view illustrating an important portion of the film cassette illustrated in Fig. 1;
Fig. 4 is a section view illustrating an important portion of a film cassette according to a second embodiment of the present invention;
Fig. 5 is a partially sectional front view illustrating a film cassette according to a third embodiment of the present invention;
Fig. 6 is a sectional view illustrating an important portion of the film cassette illustrated in Fig. 5;
Fig. 7 is a perspective view illustrating a film cassette according to a fourth embodiment of the present invention;
Fig. 8 is a section view illustrating the film cassette illustrated in Fig. 7;
Fig. 9 is a perspective view illustrating a film cassette illustrated in Fig. 7 and a photographic camera according to the present invention for use therewith;
Fig. 10 is a block diagram illustrating an electrical construction of the camera illustrated in Fig. 9;
Fig. 11 is a flowchart illustrating an operation of the camera illustrated in Fig. 9; and
Fig. 12 is a perspective view illustrating a further film cassette.

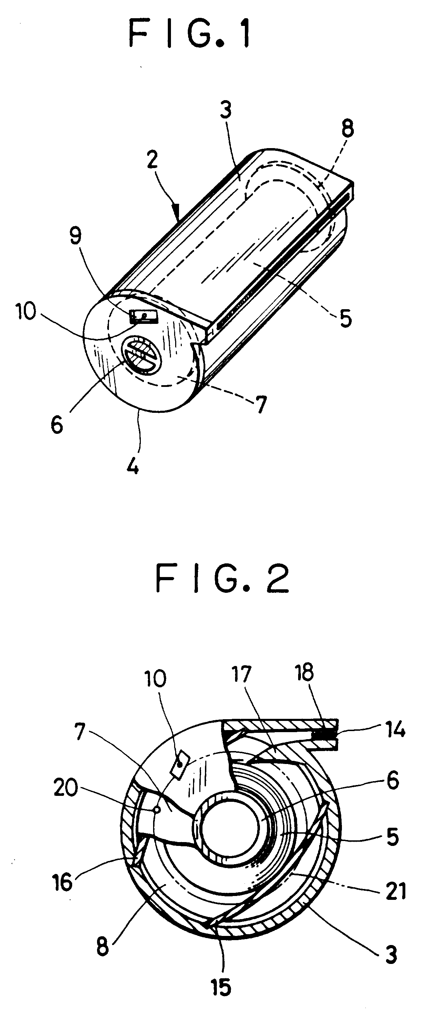

In Fig. 1 illustrating a film cassette according to the present invention, the film cassette 2 has a plastic-molded cassette shell 3 covered with a cassette cap 4. Photographic film 5 e.g. negative film is contained in the cassette shell 3. The negative film 5 is wound on a spool 6, on which flanges 7 and 8 are integrally formed near its both ends for shielding the inside of the film cassette from the outer light and for preventing the spool 6 from dropping down from the cassette shell 3. The ends of the spool 6 do not project from the film cassette 2 but are included in the outline of the film cassette 2 underneath so as to prevent a user from rotating the spool 2 only with his fingers.

The cassette cap 4 is provided with an indicator window 9 in which an O mark 10 indicating the unused state as illustrated in Fig. 1. When the negative film 5 is transported, an indicator plate later to be described is moved to the position under the indicator window 9, and shows an X mark indicating the used state. Although the marks of O and X are used in the present invention, yet the indication may be made by letters, pictures or colors.

In Fig. 2 illustrating an important portion of the film cassette 2, a film passage mouth 14 is formed on the outer surface of the film cassette 3. A pair of resilient members 15 and 16 are mounted in the cassette shell 3 for pressing the outermost convolution of the film roll formed by the negative film 5 wound on the spool 6 so as to prevent the film roll from loosening. A guide portion 17 is formed inside the film cassette 3 for contact with the outermost convolution of the negative film 5. The guide portion 17 separates the leading end of the negative film 5 from the outermost convolution of the film roll while rotating clockwise in Fig. 2 in order to guide the leading end toward the film passage mouth 14. A plush 18 is attached to the film passage mouth 14 so that no outer light can enter the cassette shell 3.

On the flange 7 which is close to the cassette cap 4, a pin 20 is formed on its upper surface. When the spool 6 is rotated clockwise, the pin 20 rotates also clockwise along a path 21 illustrated by the dash and dotted line so as to shift an indicator plate 22.

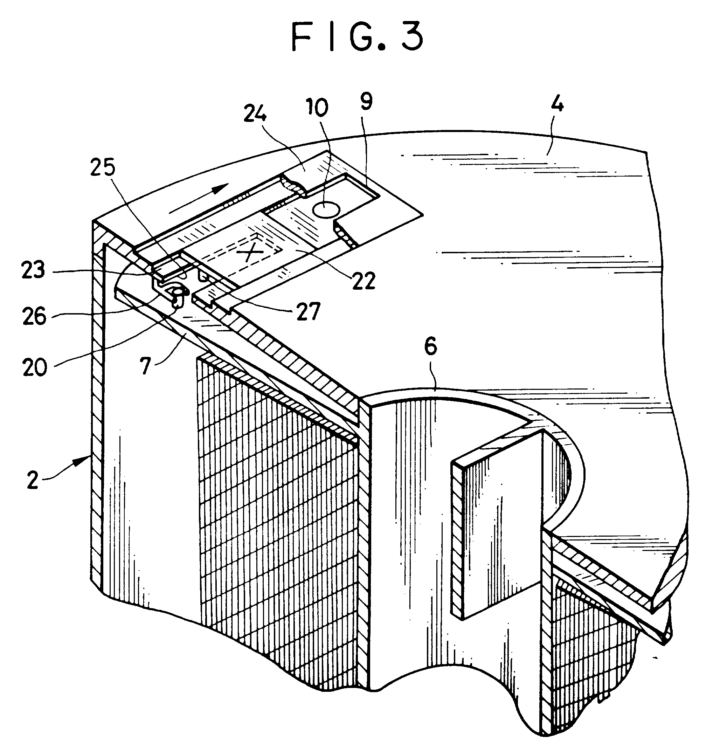

The cassette cap 4 in Fig. 3 is provided with an arresting member 26 inside for holding the pin 20 to stop the spool 6 from rotation. The arresting member 26 is formed with a fragile material such as wax or a hot-melt resin. When the film cassette 2 is loaded in a camera, the arresting member 26 is broken by the pin 20 upon rotation of the spool 6 by means of a fork provided on the camera. The arresting member 26, however, can never be broken by such a weak rotating force as applied by a user's fingers to the spool 6.

A rectangular recess 23 is formed on the cassette cap 4, and carries the O mark 10 on its surface. The above indicator plate 22 is slidably fitted on the recess 23. A groove 25 is formed on the recess surface on the left side along the direction of sliding the indicator plate 22, which carries an X mark 22a. The recess 23 is covered with a cover 24 having the indicator window formed therein. The indicator plate 22 is held between the cover 24 and the surface of the recess 23 for prevention of a free slide. A projection 27 is formed on the lower surface of the indicator plate 22 for entering the groove 25 in order to be pressed by the pin 20.

The operation of the film cassette 2 thus constructed is now described. When the unused film cassette 2 is inserted in a camera and its back door is closed, then the spool 6 is rotated clockwise as in Fig. 2. In the initial step of the rotation, the pin 20 breaks the arresting member 26 and shifts clockwise along the path 21. The pin 20 thereafter presses the projection 27 to shift the indicator plate 22 to the right in Fig. 3. The indicator plate 22 is pressed up to the position inside the indicator window 9 to indicate the X mark 22a. The path of the projection 27 is tangential to the circular path 21 of the pin 20. Accordingly, the pin 20 can move along the path 21 without pressing the projection 27 after the indicator plate 22 has been pressed up to the indicator window 9.

When the leading end of the negative film 5 is in contact with the guide portion 17 during the rotation of the film roll, the leading end is separated from the outermost convolution of the film roll and is directed toward the film passage mouth 14. Further rotation of the spool 6 advances the negative film 5 through the film passage mouth 14 to the outside of the film cassette 3. The initial advance of the film is completed when the leading end of the negative film 5 is taken up by a take-up spool of the camera. The negative film 5 is then wound up frame by frame for each exposure. After a predetermined number of exposures are carried out, the spool 6 is rotated counterclockwise in Fig. 2 by a film rewinding mechanism well known in the art. Though the pin 20 rotates counterclockwise along the path 21, the pin 20 will not engage with the projection 27, since the projection 27 is out of the path 21. Therefore the indicator plate 22 will not be shifted from inside the indicator window 9.

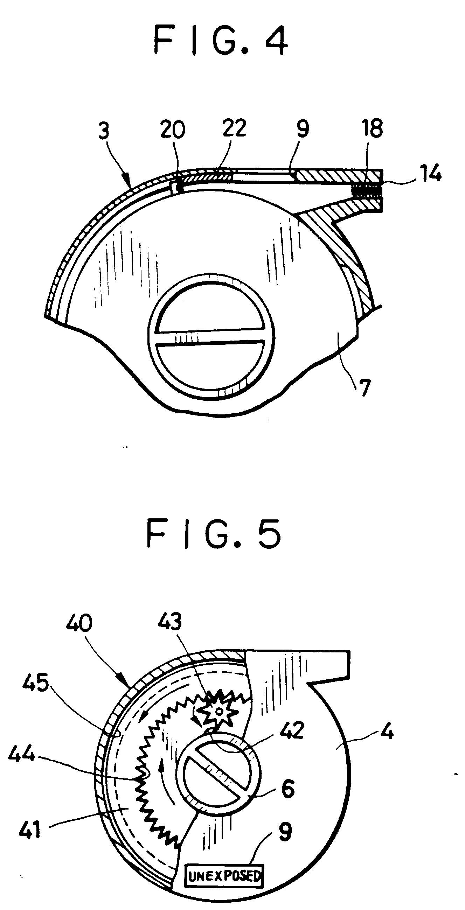

In Fig. 4 illustrating a second embodiment of film cassette, the indicator window 9 is formed on the cassette shell 3 on its circumferential surface. The pin 20 for shifting the indicator plate 22 is formed on the peripheral edge of the flange 7. The indicator plate 22 is arc-shaped so as to move on the circumferential surface of the cassette shell 3. The operation and effect of the present embodiment is the same as the embodiment above.

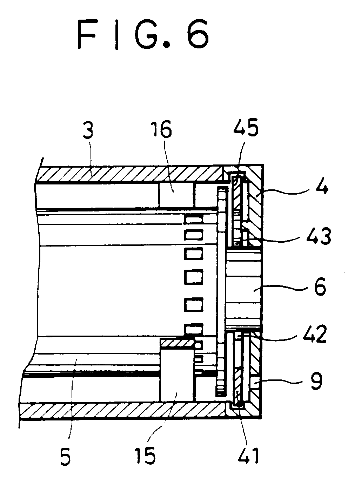

In Figs. 5 and 6 illustrating a third embodiment of film cassette, the film cassette 40 has an annular indicator plate 41 to be rotated for indication through the indicator window 9 formed in the cassette cap 4. A resilient projection 42 is formed on the spool 6 as illustrated, and engages with a gear 43 rotatably supported on the cassette cap 4. The projection 42 has a characteristic of spring and a shape as illustrated in Figs. 5 and 6. When rotated counterclockwise, the projection 42 transmits rotation to the gear 43 through engagement. When rotated clockwise, the projection 42 slips and transmits no rotation through no engagement with the gear 43. The gear 43 engages with teeth 44 of an internal gear constituting the indicator plate 41. The periphery of the indicator plate 41 is slidably supported by a groove 45 formed on the inner surface of the cassette shell 3.

In the film cassette 40 thus constructed, one clockwise rotation of the spool 6 causes the projection 42 to rotate the gear 43 by one tooth. The gear 43 rotates the indicator plate 41 counterclockwise by one tooth through the teeth 44. A number of rotations of the spool 6 causes rotation of the indicator plate 44 by the same number of teeth so as to cover the indication UNEXPOSED having been shown in the indicator window 9.

Upon rewinding the negative film 5 after the exposures, the spool 6 is counterclockwise rotated. However, the indicator plate 41 will not be rotated, as the projection 42 will slip without engagement with the gear 43. Therefore the indication UNUSED will never appear again in the indicator window 9. It is noted that the numbers of times for exposure may be written on the indicator plate 41 and indicated in the indicator window 9, since the indicator plate 41 has a large space for carrying various indications. In a simple camera e.g. a lens-fitted film unit, the construction in which the indicator window 9 can be observed from the outside of the camera makes it possible to use the indication instead of a counter of the camera.

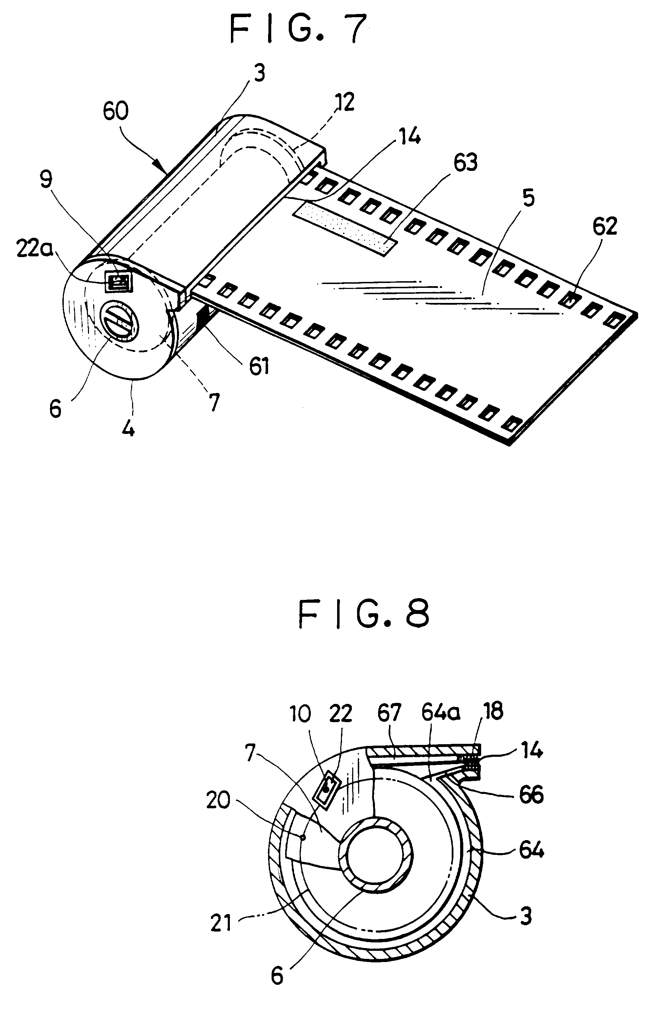

Fig. 7 illustrates a fourth embodiment of film cassette, in which elements similar to those in Figs. 1 to 3 are designated by the same reference numerals. The film leader of the negative film 5 in a film cassette 60 is protruded from the film passage mouth 14, though initially drawn back fully in the cassette shell 3. The circumferential surface of the cassette shell 3 is provided with a DX code 61 by plating for containing film information such as a maximum number N_{MAX} of photographable frames and a film sensitivity.

Both lateral edges of the negative film 5 is provided with perforations 62 along the direction of transporting the film 5. The leader of the negative film 5 has thereon a rectangular magnetic layer 63 for recording thereon a number N of exposed frames in a parallel direction to the perforations 62. In the present embodiment, the length of the magnetic layer 63 is determined to be half as long as one frame. The beginning of the magnetic layer 63 is disposed at the 10th of the perforations 62 from the leading end of the photographic film 5. The magnetic layer 63 is provided in an image recording area in the present embodiment, but may be provided instead between a lateral edge of the negative film 5 and the perforations 62. In the latter case, the magnetic layer 63 does not need to be provided in the leader of the negative film 5, since the magnetic layer 63 will be out of the way of the image recording area upon printing. In the indicator window 9, the X mark 22a is shown for indicating a used state of the negative film 5.

In Fig. 8 illustrating the inside of the film cassette 60, a pair of annular ridges 64 and 65 are formed on the inner surface of the cassette shell 3. The ridges 64 and 65 serve to press the outermost convolution of the film roll wound on the spool 6 so as to prevent the film roll from loosening, as is the case of the resilient members 15 and 16. As the ridges 64 and 65 have the same construction , only the front ridge 64 is now described. The ridge 64 has a passage cutoff connected to the film passage mouth 14. A pair of guide projections 66 and 67 are provided on the edges of the passage portion for extending to the film passage mouth 14. A separation claw 64a is formed on the inner end of the guide projection 66 in the cassette shell 3, and is similar to the guide portion 17 in Fig. 2. The leading end of the negative film 5 separated from the film roll is guided by the guide projections 66 and 67, and advanced to the outside of the cassette shell 3 through the film passage mouth 14. The detailed construction of the cassette cap 4 is the same as that illustrated in Fig. 3.

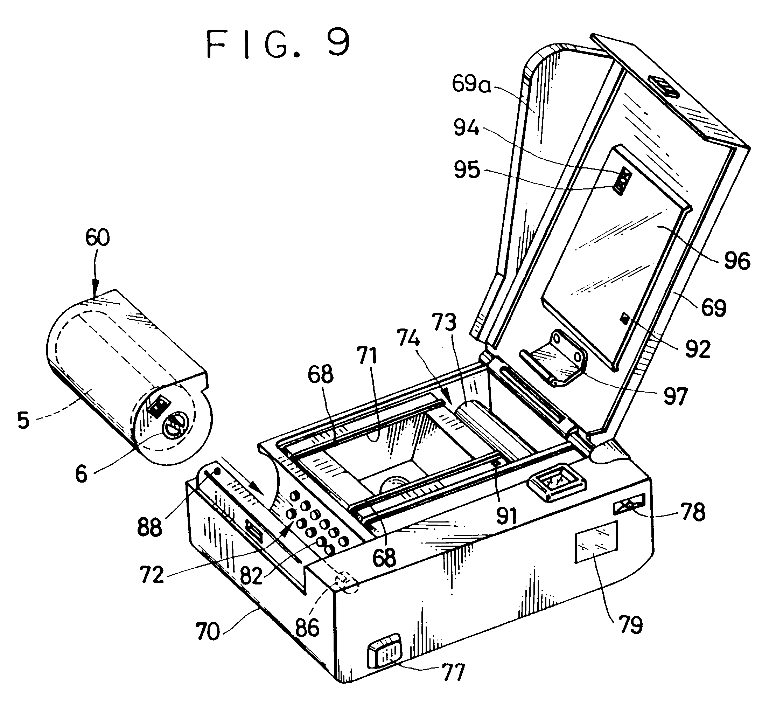

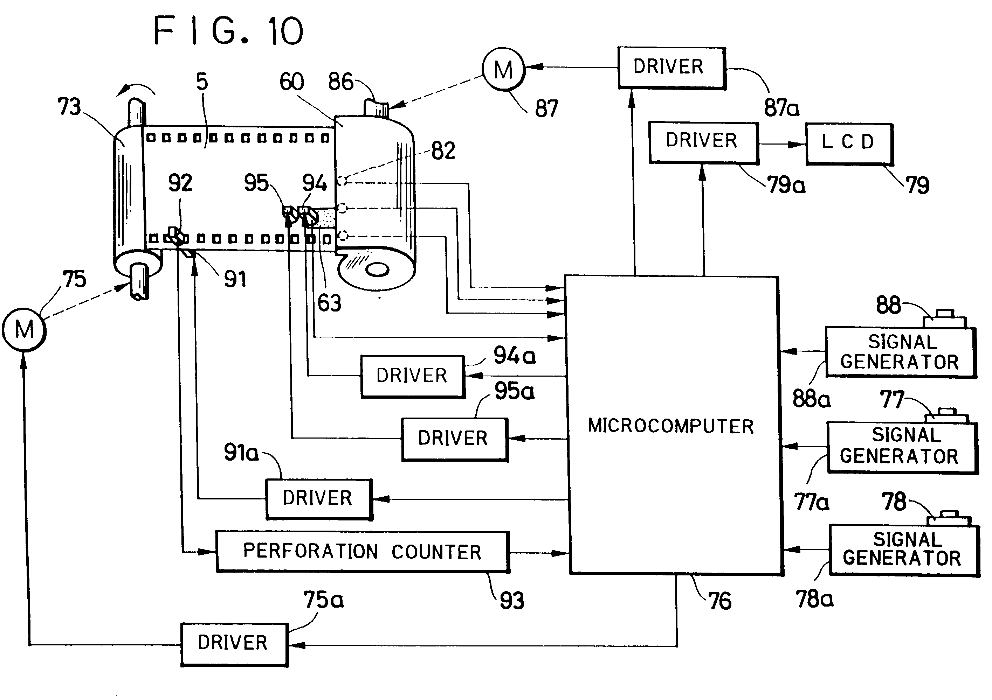

In Figs. 9 and 10 illustrating the inside and the electrical construction of a camera for use with the above-described film cassette 60, a camera body 70 with a back door 69 open is provided with an aperture 71 at the center. On both lateral sides of the aperture 71 in the camera body 70, there are provided a film supply chamber 72 for loading the film cassette 60 and a film take-up chamber 74 with a film take-up spool 73 mounted therein. A pair of guide rails 68 extend between the film supply chamber 72 and the film take-up chamber 74 on both upper and lower edges of the aperture 71 for transporting the negative film 5 parallel thereto. The film take-up spool 73 is rotated by a motor 75. The motor 75 is controlled as to the rotation amount through a driver 75a by a microcomputer 76 for controlling the camera. The back door 69 is provided with a pressure plate 96 well known in the art, and a guide member 97 for causing the leading end of the advanced negative film 5 to engage with the take-up spool 73. The back door 69 includes a bottom cover 69a for shielding the film supply chamber 72 from light.

Detective terminals 82 are provided on the inner surface of the film supply chamber 72, and serve to read out the film information contained in the DX code 61 in the microcomputer 76. As is indicated by the broken line in the drawing, a fork 86 is provided on the upper inner wall of the film supply chamber 72 for fitting in the spool 6 to rotate it.

The fork 86 is to be rotated in both direction by a motor 87 for initially advancing and rewinding the negative film 5. The term of film initial advance designates the film transportation which begins when the leading end of the negative film 5 is advanced from the cassette shell 3 by rotation of the spool 6, and terminates when it is taken up by the take-up spool 73. The motor 87 is controlled as to the direction and the amount of rotation by the microcomputer 76 through a driver 87a. A reference numeral 88 designates a back door switch of which the actuation causes a signal generator 88a to output a signal toward the microcomputer 76 in order to rotate forward the motors 75 and 87.

The upper surface of the camera body 70 has a release button 77, a rewinding button 78, a liquid crystal display panel 79 for indicating a number of unexposed frames, and the like. The release button 77 and the rewinding button 78 are connected to the microcomputer 76 through respective signal generators 77a and 78a. The microcomputer 76 operates the shutter (not shown) upon receiving a shutter release signal from the signal generator 77a, and rotates forward the motor 75 upon receiving a completion signal designating the completion of the shutter operation. The liquid crystal display panel 79 is connected to the microcomputer 76 through a driver 79a.

An LED 91 is mounted close to the aperture 71 for emitting infrared light to which the negative film 5 is insensitive. The LED 91 is connected to the microcomputer 76 through a driver 91a and emits infrared light when the back door switch 88 is actuated. A photo sensor 92 is provided on the back door 69, faces on the LED 91 when the back door 69 is closed, and receives the infrared light for each of the perforations 62 to output a light-receiving signal. A perforation counter 93 is connected to the photo sensor 92 for performing the addition of the light-receiving signal in order to count the perforations. The count is interrupted when each frame of the negative film 5 is transported and set at the aperture 71, but is continued until it is reset. The reset of the count is carried out by the microcomputer 76 when the back door 69 opens or when the rewinding button 78 is operated.

The perforation counter 93 is connected to the microcomputer 76 and outputs thereto a counted value for each time of count. When an (N + 1)th frame is set at the aperture 71, the perforation counter 93 changes the counted value into a positioned frame number N + 1. The microcomputer 76 converts the positioned frame number N + 1 into a number N_{MAX} - N of unexposed frames. The liquid crystal display panel 79 indicates the converted value N_{MAX} - N. The positioned frame number N + 1 based on the counted value is written in a memory in the microcomputer 76 when a completion signal as described above is generated. The data thus written is a new number N of exposed frames. The memory is to be reset by a signal from the signal generator 88a.

The back door 69 is provided with a recording head 94 for recording and reading information and an erasing head 95. The recording head 94 is driven by the microcomputer 76 through a driver 94a for reading the previous number N of exposed frames written in the magnetic layer 63 when the negative film 5 is wound up, and for writing the new number N of exposed frames in the magnetic layer 63 when the negative film 5 is rewound. If the film cassette 60 is unused with no information written in the magnetic layer 63, then the recording head 94 generates no output to the microcomputer 76, which thus reads out the number N of exposed frames as 0. Slightly before the recording head 94 writes the new number N of exposed frames, the erasing head 95 is driven by the microcomputer 76 through a driver 95a so as to erase the previous number N of exposed frames.

When the recording head 94 outputs the previous number N of exposed frames, the microcomputer 76 compares the previous number N with the above-described maximum number N_{MAX} of photographable frames. If N is equal to N_{MAX}, then the microcomputer 76 stops the film initial advance, reverse rotates the motor 87, rewinds the negative film 5 through the fork 86 and the spool 6, and permits the liquid crystal display panel 79 to indicate the number 0 of unexposed frames. If the previous number N of exposed frames is smaller than the maximum number N_{MAX} of photographable frames, then the microcomputer 76 permits the liquid crystal display panel 79 to indicate the number N_{MAX} - N of unexposed frames, and continues rotating the motor 75 till the (N + 1)th frame is positioned at the aperture 71.

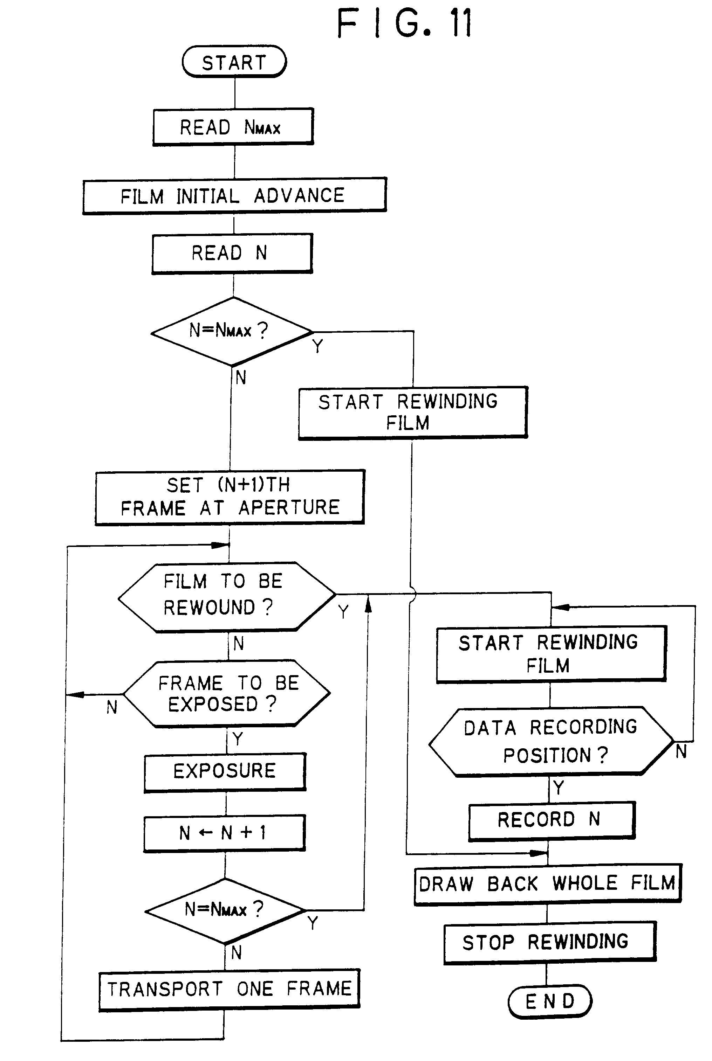

The operation of the film cassette and the camera thus constructed is now described with reference to Fig. 11. With the back door 69 open, the film supply chamber 72 is loaded with the film cassette 60 in such a condition as unexposed, with unexposed 24 frames, and with the O mark 10 shown in the indicator window and covered with the back door 69. The microcomputer 76 reads out the maximum number "24" of photographable frames of the film cassette 60 from the DX code 61 through the detective terminals 82. Upon actuating the back door switch 88 with the back door 69 closed, the microcomputer 76 causes the LED 91 to emit light through the driver 91a, and forward rotates the motors 87 and 75 through the drivers 87a and 75a. Therefore the fork 86 and the film take-up spool 73 are rotated in the film advancing direction. The fork 86 rotates the spool 6 in the film unwinding direction. As is similar to the embodiment illustrated in Figs. 1 and 3, the rotation of the spool 6 causes the indicator window 9 to show the X mark 22a. The leading end of the negative film 5 is separated from the outermost convolution of the film roll by the separation claws 64a and 65a, and is forwarded to the outside of the cassette shell 3 so as to advance toward the film take-up chamber 74.

When the front end of the magnetic layer 63 reaches the position in contact with the recording head 94 and when the perforation counter 93 counts "10" perforations, then the microcomputer 76 drives the recording head 94, and reads the magnetic layer 63 while the negative film 5 is transported in the length of half a frame. Since the recording head 94 generates no output, the microcomputer 76 causes the liquid crystal display panel 79 to indicate the number "24" of unexposed frames, and effects a film initial advance through the spool 6. When the leading end of the negative film 5 is taken up by the film take-up spool 73, the fork 86 is stopped from rotating. The film take-up spool 73 thereafter winds up the negative film 5.

The microcomputer 76 then stops the film take-up spool 73 in order to set the first frame of the negative film 5 at the aperture 71. Upon actuating the release button 77, the microcomputer 76 supplied with a completion signal further rotates the motor 75 forward to rotate the film take-up spool 73, and winds up the negative film 5. When the perforation counter 93 counts further "8" perforations, then the microcomputer 76 stops rotating the motor 75 winding up the negative film 5. The first frame is thus transported so as to permit the second frame to be positioned at the aperture 71.

After the repetition of the above operation, the twenty-fourth frame is similarly positioned at the aperture 71. Upon receiving a completion signal with the release button 77 actuated, the microcomputer 76 writes a positioned frame number "24" in the memory and resets the perforation counter 93. Without effecting a further winding-up, the microcomputer 76 reverse rotates the motor 87 to rotate the fork 86 in the rewinding direction. The rotation of the fork 86 causes the spool 6 to rotate in the rewinding direction so as to rewind the negative film 5 thereon. Although rotated in the rewinding direction along the path 21 in this process, the pin 20 never abuts nor presses the projection 27.

In the course of rewinding the negative film 5, the photo sensor 92 also outputs a light-receiving signal to the perforation 93 for each perforation. It is accordingly possible that the microcomputer 76 inspects the position of the negative film 5 even being rewound, and drives the erasing head 95 and the recording head 94 at the moment that the rear end of the magnetic layer 63 reaches the erasing head 95. The erasing head 95 erases the information for the previous number N of exposed frames in the magnetic layer 63. Specifically, no information has been stored therein because the film cassette 60 was initially unexposed. Then the recording head 94 writes in the magnetic layer 63 the new number N (=24) of exposed frames stored in the memory.

When the leading end of the negative film 5 is drawn back in the cassette shell 3, then the fork 86 is stopped to terminate rewinding the negative film 5. Upon opening the back door 69, the film cassette 60 is unloaded. In the indicator window 9 of the unloaded film cassette 60, the X mark 22a is indicated. While the back door 69 is open, the back door switch 88 is inactive to reset the perforation counter 93.

A different situation is now described where the rewinding button 78 is pressed after effecting 10 exposures with the unexposed film cassette 60. Upon actuating the rewinding button 78, the signal generator 78a outputs a rewinding signal to the microcomputer 76, which resets the perforation counter 93.

As is described above, the fork 86 is thereafter reverse rotated so as to permit the spool 6 to wind thereon the negative film 5 after exposure. When the rear end of the magnetic layer 63 reaches the erasing head 95, then the erasing and recording heads 95 and 94 are actuated. A number "10" of exposed frames stored in the memory is written in the magnetic layer 63. The negative film 5 is fully rewound till its leading end is drawn back in the cassette shell 3. The X mark 22a is indicated in the indicator window 9 of the film cassette 60 unloaded from the film supply chamber 72.

When the present film cassette 60 is loaded again in the camera body 70 and the back door 69 is closed, then the fork 86 rotates forward to rotate the spool 6 in the film advancing direction to effect the film initial advance of the negative film 5. The recording head 94 reads the number "10" of exposed frames from the magnetic layer 63 to output it to the microcomputer 76. The microcomputer 76 causes the liquid crystal display panel 79 to indicate the number "14" of unexposed frames, and rotates the motors 75 and 87 to set the 11th frame of the negative film 5 at the aperture 71. Therefore it is possible to effect exposures on the unexposed frames after the first 10 exposed frames. If a number "24" of exposed frames is read out from the magnetic layer 63, then the microcomputer 76 causes the liquid crystal display panel 79 to indicate the number "0" of unexposed frames, and stops the fork 86 and the film take-up spool 73 from rotating in the film advancing direction to stop the film initial advance. The fork 86 is then rotated in the film rewinding direction to draw back the leading end of the negative film 5 in the cassette shell 3.

In the present embodiment, the magnetic layer 63 formed on the negative film 5 contains no information in the unused state, but a number N of exposed frames written therein after beginning to use it, which information is read out when the negative film 5 is loaded again. However, an IC incorporated in the cassette shell 3 may instead contain the number N written therein to be read out at the time of next loading so as to obtain a similar effect. Further, the magnetic layer 63 or the IC thus incorporated may contain not only the number N of exposed frames but also a maximum number N_{MAX} of photographable frames, film sensitivity, image frame information and the like written therein to be read out. Information may be beforehand preset therein to be read by the camera as to the unexposed state, film sensitivity and a maximum number N_{MAX} of photographable frames, as particular to the type of film.

Although the present embodiment has a construction of the indicator plate 22 slid to be shown in the indicator window 9, the indicator plate may instead be rotated to be shown therein by means of engagement of gears as is illustrated in Figs. 5 and 6.

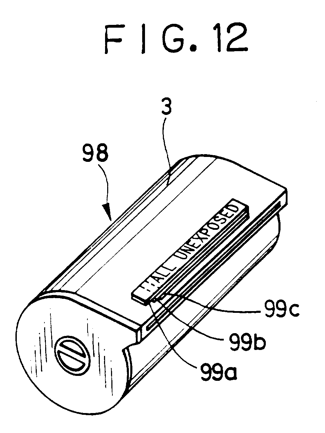

In Fig. 12 illustrating an amended film cassette, the negative film 5 with the magnetic layer 10 formed thereon is contained in the cassette shell 3, of which three adhesive labels 99a to 99c are stuck one over another on the outer surface. The adhesive labels 99a to 99c are to be removed in accordance with the using state of the film cassette 98 in this construction. Thus the film cassette 98 can be visually judged as to the unexposed or exposed state by observing the uppermost of the remaining of the adhesive labels 99a to 99c. It is convenient to indicate ALL UNEXPOSED on the upper label 99a, A FEW UNEXPOSED on the middle label 99b, and ALL EXPOSED on the lower label 99c.

## Claims

1. A self-advancing film cassette with photographic film (5) light-tightly contained in a cassette shell (3), in which rotation of the spool (6) in the unwinding direction causes the film leader to advance to the outside of said cassette shell through a film passage mouth (14), said film cassette comprising:
an indicator window (9) formed on a surface of said cassette shell for indicating therein a degree of using said film;
**characterised by**
said cassette shell (3) comprising
an indicator member (22,41) movable from a first into a second position, said indicator member having an engaging portion (27, 44) for engaging with a portion of said spool (6) and being visible within said indicator window in one of said first and second positions, so that the indication shown by said indicator member (22), by means of said engaging portion (27,44), changes in accordance with rotation of said spool (6).

2. A self-advancing film cassette as defined in claim 1, wherein said indicator member (22) is slid straight from said first into said second position.

3. A self-advancing film cassette as defined in claim 1, wherein a surface of said indicator member (41) indicates the number of exposed frames in said film (5).

4. A self-advancing film cassette as defined in any one of claims 1 to 3, wherein a surface of said indicator member (22,41) indicates whether at least one frame has been exposed or not in said film (5).

5. A self-advancing film cassette as defined in any one of claims 1 to 4, wherein said indication is changed in accordance with rotation of said spool (6) in the direction of unwinding said film (5).

6. A self-advancing film cassette as defined in any one of claims 1 to 5, wherein said indicator window (9) is arranged on an end face of said cassette shell (3).

7. A self-advancing film cassette as defined in any of claims 1 to 5, wherein said indicator window (9) is arranged on a circumferential surface of said cassette shell (3).

8. A self-advancing film cassette as defined in any one of claims 1 to 7, including an engaging pin (20) rotatable with said spool (6) for engaging said engaging portion (27) of said indicator member (22).

9. A self-advancing film cassette as defined in claim 8, wherein said engaging pin (20) is arranged on a flange (7) of said spool (6).

10. A self-advancing film cassette as defined in any one of claims 1 to 7, wherein said indicator member (22,41) moves by means of a gear mechanism (43) in engagement.

11. A self-advancing film cassette as defined in any one of claims 1 to 10, further comprising:
a data recording portion (63) provided on said film (5) or on said cassette shell (3) for storing data as to the number of exposed frames in said film to be read by a data reading device (94) incorporated in a camera.

12. A self-advancing film cassette as defined in claim 11, wherein said data recording portion is a magnetic recording layer (63) formed in said film (5).

13. A self-advancing film cassette as defined in any one of claims 1 to 12 further comprising:
a label (99a,99b,99c) attached to the outer surface of said cassette shell for being removed in accordance with a degree of using said film (5).

## Patentansprüche

1. Selbstverrückende Filmkassette mit einem fotografischen Film (5), der lichtdicht in einer Kassettenkapsel (3) enthalten ist, wobei die Drehung der Spule (6) in Abwickelrichtung bewirkt, daß der Filmanfang zur Außenseite der Kassettenkapsel durch ein Filmdurchtrittsmaul (14) vorgeschoben wird, wobei die Filmkassette ein Anzeigefenster (9) enthält, das an einer Oberfläche der Kassettenkapsel ausgebildet ist, um damit den Grad des Verbrauchs des Films anzuzeigen, **dadurch gekennzeichnet,** daß die Kassettenkapsel (3) ein Anzeigeteil (22, 41) enthält, das aus einer ersten in eine zweite Position bewegbar ist, wobei das Anzeigeteil einen Eingriffsbereich (27, 44) zum Eingriff mit einem Bereich der Spule (6) aufweist und innerhalb des Anzeigefensters in einer der ersten oder zweiten Positionen sichtbar ist, so daß die durch das Anzeigeteil (22) angezeigte Anzeige sich durch den Eingriffsbereich (27, 44) gemäß der Drehung der Spule (6) ändert.

2. Selbstvorrückende Filmkassette gemäß Anspruch 1, wobei das Anzeigeteil (22) geradlinig aus der ersten in die zweite Position verschoben ist.

3. Selbstvorrückende Filmkassette nach Anspruch 1, wobei eine Oberfläche des Anzeigeteils (41) die Anzahl belichteter Bilder auf dem Film (5) anzeigt.

4. Selbstvorrückende Filmkassette nach einem der Ansprüche 1 bis 3, wobei eine Oberfläche des Anzeigeteils (22, 41) anzeigt, ob mindestens ein Bild auf dem Film (5) belichtet oder unbelichtet ist.

5. Selbstvorrückende Filmkassette nach einem der Ansprüche 1 bis 4, wobei sich die Anzeige in Abhängigkeit mit der Drehung der Spule (6) in Abwickelrichtung des Films (5) ändert.

6. Selbstvorrückende Filmkassette nach einem der Ansprüche 1 bis 5, wobei das Anzeigefenster (9) an einer Stirnseite der Kassettenkapsel (3) angeordnet ist.

7. Selbstvorrückende Filmkassette nach einem der Ansprüche 1 bis 5, wobei das Anzeigefenster (9) an einer Umfangsfläche der Kassettenkapsel (3) angeordnet ist.

8. Selbstvorrückende Filmkassette nach einem der Ansprüche 1 bis 7, enthaltend einen Eingriffstift (20), der mit der Spule (6) drehbar ist, um mit dem Eingriffsbereich (27) des Anzeigeteils (22) in Eingriff zu treten.

9. Selbstvorrückende Filmkassette gemäß Anspruch 8, wobei der Eingriffstift (20) an einem Flansch (7) der Spule (6) angeordnet ist.

10. Selbstvorrückende Filmkassette nach einem der Ansprüche 1 bis 7, wobei das Anzeigeteil (22, 41) sich durch einen in Eingriff befindenden Zahnradmechanismus (43) bewegt.

11. Selbstvorrückende Filmkassette nach einem der Ansprüche 1 bis 10, ferner enthaltend einen Datenaufnahmebereich (63), der am Film (5) oder der Kassettenkapsel (3) vorgesehen ist, um Daten, wie beispielsweise die Anzahl der belichteten Bilder im Film, zu speichern, um sie durch ein Datenlesgerät (94) einer Kamera lesbar zu machen.

12. Selbstvorrückende Filmkassette nach Anspruch 11, wobei der Datenaufnahmebereich eine magnetische Aufnahmeschicht (63) ist, die im Film (5) ausgebildet ist.

13. Selbstvorrückende Filmkassette nach einem der Ansprüche 1 bis 12, ferner enthaltend ein Etikett (99a, 99b, 99c), das an der äußeren Oberfläche der Kassettenkapsel befestigt ist, um in Übereinstimmung mit einem Grad des Verbrauchs des Films (5) entfernt zu werden.

## Revendications

1. Cassette à film à avance automatique avec un film photographique (5) contenu d'une façon étanche à la lumière dans un boîtier de cassette (3), dans lequel une rotation de la bobine (6) dans la direction de déroulement amène l'amorce de film à avancer à l'extérieur dudit boîtier de cassette en passant par une embouchure de passage de film (14), ladite cassette à film comportant :
une fenêtre indicatrice (9) formée sur une surface dudit boîtier de cassette afin d'indiquer un degré d'utilisation dudit film;
caractérisé par
ledit boîtier de cassette (3) qui comporte un élément indicateur (22, 41) mobile d'une première vers une deuxième position, ledit élément indicateur ayant une partie d'engagement (27, 44) destinée à engager une partie de ladite bobine (6) et qui est visible dans ladite fenêtre indicatrice dans une desdites première et deuxième positions, de telle sorte que l'indication -eprésentée par ledit élément indicateur (22), au moyen de ladite partie d'engagement (27, 44), change en fonction de la rotation de ladite bobine (6).

2. Cassette à film à avance automatique selon la revendication 1, dans laquelle ledit élément indicateur (22) coulisse de manière rectiligne de ladite première vers ladite deuxième position.

3. Cassette à film à avance automatique selon la revendication 1, dans laquelle une surface dudit élément indicateur (41) indique le nombre de vues exposées dans ledit film (5).

4. Cassette à film à avance automatique selon l'une quelconque des revendications 1 à 3, dans laquelle une surface dudit élément indicateur (22, 41) indique si au moins une vue a été exposée ou non dans ledit film (5).

5. Cassette à film à avance automatique selon l'une quelconque des revendications 1 à 4, dans laquelle ladite indication est modifiée en fonction de la rotation de ladite bobine (6) dans la direction de déroulement dudit film (5).

6. Cassette à film à avance automatique selon l'une quelconque des revendications 1 à 5, dans laquelle ladite fenêtre indicatrice (9) est disposée sur une face d'extrémité dudit boîtier de cassette (3).

7. Cassette à film à avance automatique selon l'une quelconque des revendications 1 à 5, dans laquelle ladite fenêtre indicatrice (9) est disposée sur une surface circonférentielle dudit boîtier de cassette (3).

8. Cassette à film à avance automatique selon l'une quelconque des revendications 1 à 7, comprenant un doigt d'engagement (20) pouvant tourner avec ladite bobine (6) afin d'engager ladite partie d'engagement (27) dudit élément indicateur (22).

9. Cassette à film à avance automatique selon la revendication 8, dans laquelle ledit doigt d'engagement (20) est prévu sur une joue (7) de ladite bobine (6).

10. Cassette à film à avance automatique selon l'une quelconque des revendications 1 à 7, dans laquelle ledit élément indicateur (22, 41) se déplace au moyen d'un mécanisme à pignon (43) en engagement.

11. Cassette à film à avance automatique selon l'une quelconque des revendications 1 à 10, comportant en outre :
une partie d'enregistrement de données (63) prévue sur ledit film (5) ou sur ledit boîtier de cassette (3) afin de stocker des données concernant le nombre de vues exposées dans ledit film afin d'être lues par un dispositif de lecture de données (94) incorporé dans une caméra.

12. Cassette à film à avance automatique selon la revendication 11, dans laquelle ladite partie d'enregistrement de données est une couche d'enregistrement magnétique (63) formée dans ledit film (5).

13. Cassette à film à avance automatique selon l'une quelconque des revendications 1 à 12, comportant en outre :
une étiquette (99a, 99b, 99c) fixée sur la surface extérieure dudit boîtier de cassette de façon à être enlevée en fonction du degré d'utilisation dudit film (5).
